# EUROPÄISCHE PATENTANMELDUNG

(11) **EP 0 913 802 A2**
(43) Veröffentlichungstag der Anmeldung: **06.05.1999**
(21) Anmeldenummer: 98115781.1
(22) Anmeldetag: 21.08.1998
(51) Int. Cl.: G08G 1/0968

(54) **Kraftfahrzeug mit autonomer Fahrzeugführung und elektronischen Kommunikationsmitteln**

(30) Priorität: 29.09.1997 DE 19743024
(71) Anmelder: DaimlerChrysler AG, 70567 Stuttgart (DE)
(72) Erfinder: Hahn, Stefan, 73770 Denkendorf (DE)

(57) **Zusammenfassung**

Die Erfindung bezieht sich auf ein Kraftfahrzeug mit Mitteln zur zeitweisen autonomen Fahrzeugführung und Mitteln zur Kommunikation eines Fahrzeugnutzers mit wenigstens einem elektronischen Kommunikationssystem.

Erfindungsgemäß ist eine Bedieneinrichtung vorgesehen, durch welche die Kommunikationsmittel zwecks Durchführung eines Kommunikationsvorgangs und die Fahrzeugführungsmittel zwecks autonomer Fährzeugführung aktivierbar sind. Die aktivierten Fahrzeugführungsmittel übermitteln bei Erkennen einer erforderlich werdenden manuellen Fahrzeugführung eine Übernahmeinformation an die Kommunikationsmittel, die diese Übernahmeinformation an einer Anzeigeeinrichtung anzeigen.

## Beschreibung

Die Erfindung die Erfindung bezieht sich auf ein Kraftfahrzeug mit Mitteln zur zeitweisen autonomen Fuhrung des Fahrzeugs und Mitteln zur Kommunikation eines Fahrzeugnutzers mit wenigstens einem elektronischen Kommunikationssystem.

Es ist bekannt, Kraftfahrzeuge, wie z.B. Automobile, mit Mitteln zur autonomen Führung des Fahrzeugs auszustatten, um den Fahrzeugführer zeitweise von der Fahrzeugführungsaufgabe zu befreien bzw. zu entlasten. Autonome Fahrzeugführungsmittel sind beispielsweise für Automobile in Form von automatischen Geschwindigkeitsregeleinrichtungen, automatischen Abstandsregeleinrichtungen, Einrichtungen zur automatischen Fahrzeugführung im Stop&Go-Verkehr und/oder zum elektronischen Ankoppeln an ein vorausfahrendes Führungsfahrzeug auf der Autobahn und Einrichtungen zur selbsttätigen Einhaltung der Fahrspur bekannt.

Andererseits ist es bekannt, Kraftfahrzeuge mit Mitteln zur Kommunikation eines Fahrzeugnutzers, insbesondere auch des Fahrzeugführers, mit einem oder mehreren elektronischen Kommunikationssystemen auszurüsten, d.h. sogenannte Telematikanwendungen für das Fahrzeug vorzusehen. Solche Telematikanwendungen reichen vom Autoradio über das Autotelefon und Fernsehen im Fahrzeug bis hin zu mobilen Büroanwendungen, wie mobiles Telefax, mobile Verwaltungs- oder Administrations-Telearbeit und mobiler Zugang zu Datennetzen, z.B. zum Internet. Der mobile Datenbankzugang erlaubt vom Fahrzeug aus den Zugriff auf elektronische Informationen, z.B. in Form elektronischer Zeitungen, elektronischer Post oder Internet-Informationen, und/oder auf elektronische Unterhaltungsmedien, z.B. Videospiele.

Eine bekannte Schwierigkeit von derartigen Telematikanwendungen im Fahrzeug besteht darin, daß wenn sie vom Fahrzeugführer benutzt werden, dieser der Kommunikation mit dem jeweils gewählten elektronischen Kommunikationssystem eine gewisse Aufmerksamkeit widmen muß, so daß die Gefahr besteht, daß er vom Verkehrsgeschehen abelenkt wird. Zwar besteht bei herkömmlichen Kraftfahrzeugen der eingangs genannten Art für den Fahrzeugführer die Möglichkeit, vor einer Aktivierung eines Kommunikationsvorgangs mit einem elektronischen Kommunikationssystem die Mittel zur autonomen Fahrzeugführung zu aktivieren. Dies behebt die genannte Schwierigkeit jedoch nicht völlig, da in manchen Fahrsituationen die Fahrzeugführungsaufgabe wieder rechtzeitig vom Fahrzeugfuhrer übernommen werden muß, so daß nicht gwährleistet ist, daß eine autonome Fahrzeugführung während des gesamten Kommunikationsvorgangs beibehalten werden kann.

Der Erfindung liegt als technisches Problem die Bereitstellung eines Kraftfahrzeuges der eingangs genannten Art zugrunde, in welchem die Funktionen autonome Fahrzeugfuhrung einerseits und Kommunikation mit einem elektronischen Kommunikationssystem andererseits vorteilhaft in Richtung hoher Sicherheit der Fahrzeugführung und hohem Bedienkomfort der Kommunikationssystemnutzung verknüpft sind.

Die Erfindung löst dieses Problem durch die Bereitstellung eines Kraftfahrzeuges mit den Merkmalen des Anspruchs 1. Bei diesem Kraftfahrzeug ist eine Bedieneinrichtung vorgesehen, durch welche die Kommunikationsmittel zwecks Durchführung eines Kommunikationsvorgangs und die Fahrzeugführungsmittel zwecks autonomer Führung des Fahrzeugs aktivierbar sind. Damit wird gewährleistet, daß eine autonome Fahrzeugführung aktiviert werden kann, wenn der Fahrzeugführer die Durchführung eines Kommunikationsvorgangs mit einem elektronischen Kommunikationssystem anfordert bzw. bei aktivierter autonomer Fahrzeugfunktion dem Fahrer der Zugang zu elektronischen Kommunikationssystemen gewährt bzw. ermöglicht wird.

Die Fahrzeugführungsmittel sind dabei so ausgelegt, daß sie im aktivierten Zustand rechtzeitig eine erforderlich werdende manuelle Fahrzeugführung erkennen und in diesem Fall eine Übernahmeinformation an die Kommunikationsmittel übermitteln. Letztere zeigen die jeweils empfangene Übernahmeinformation an einer Anzeigeeinrichtung an. Der Fahrzeugführer wird auf diese Weise im Fall eines gerade laufenden Kommunikationsvorgangs mit einem elektronischen Kommunikationssystem über diese Anzeigeeinrichtung rechtzeitig darüber informiert, daß er demnächst die Fahrzeugführung wieder selbst übernehmen muß, so daß er gegebenenfalls den laufenden Kommunikationsvorgang bis dahin beenden kann.

Bei einem nach Anspruch 2 weitergebildeten Kraftfahrzeug sind die Kommunikationsmittel so ausgelegt, daß sie im aktivierten Zustand feststellen, wenn der Systemnutzer, insbesondere der Fahrzeugführer, seit einer vorgebbaren Zeitspanne keine Eingabe mehr vorgenommen, d.h. gegenüber dem Kommunikationssystem keine Reaktion mehr gezeigt hat. In einem solchen Fall geben die Kommunikationsmittel eine Nutzereingabeaufforderungsinformation zur Kenntnisnahme durch den Fahrzeugführer ab. Bleibt eine Reaktion des Fahrzeugführers auch daraufhin aus, übermitteln die Kommunikationsmittel eine Fahrerinaktivitätsinformation an die Fahrzeugführungsmittel, so daß diese rechtzeitig darüber informiert werden, daß der Fahrer möglicherweises momentan nicht in der Lage ist, die Fahrzeugführung zu übernehmen. Die Mittel zur autonomen Fahrzeugführung können dann bei Bedarf in einer solchen Situation einen sicheren Fahrzeugzustand herbeiführen, z.B. durch Verlangsamen oder gänzliches Anhalten des Fahrzeugs. Dadurch kann beispielsweise Unfallgefahren wegen übermüdetem Fahrzeugführer vorgebeugt werden.

Bei einem nach Anspruch 3 weitergebildeten Kraftfahrzeug beinhaltet die Bedieneinrichtung Mittel zur Dateneingabe für die Kommunikationsmittel durch den Nutzer dergestalt, daS diese Nutzergabemittel an einer handbedienten Lenkvorrichtung des Fahrzeugs angeordnet sind, d.h. beispielsweise an einem Lenkrad oder Lenkknüppel. Die Nutzereingabemittel umfassen dabei ein Eingabeelement in Form eines sogenannten Trackballs oder eines sogenannten Mausstifts, wie es von Notebooks zur Bewegung des Bildschirmzeigers gebräuchlich ist. Stattdessen oder zusätzlich enthalten die Nutzereingabemittel ein Maustasten-Eingabeelement, d.h. eine Gruppe von zwei Tasten, wie sie bei einer Computermaus oder als funktionell entsprechende Tastenanordnung bei Notebook-Tastaturen gebräuchlich ist. Damit kann der Fahrzeugführer, ohne die Lenkvorrichtung loslassen zu müssen, durch Fingerbetätigung der Nutzereingabemittel Eingaben während eines Kommunikationsvorgangs mit einem elektronischen Kommunikationssystem tätigen.

Ein vorteilhaftes Ausführungsbeispiel der Erfindung ist in den Zeichnungen dargestellt und wird nachfolgend beschrieben. Hierbei zeigen:
- Fig. 1: ein schematisches Blockdiagramm eines Systems für ein Kraftfahrzeug mit Mitteln zur autonomen Fahrzeugführung und Mitteln zur Kommunikation mit elektronischen Kommunikationssystemen,
- Fig. 2: eine beispielhafte Anzeige auf einem Bildschirm einer Anzeigeeinrichtung der Kommunikationsmittel in einer bestimmten Fahrsituation,
- Fig. 3: eine Ansicht entsprechend Fig. 2, jedoch bei einer anderen Fahrsituation,
- Fig. 4: eine Ansicht entsprechend Fig. 2, jedoch für noch eine andere Fahrsituation,
- Fig. 5: eine teilweise, schematische Vorderansicht eines das System der Fig. 1 bis 4 enthaltenden Kraftfahrzeuges,
- Fig. 6: eine teilweise, schematische Rückansicht des Lenkrades von Fig. 5 und
- Fig. 7: eine teilweise, schematische Vorderansicht des Lenkrades entsprechend Fig. 5, jedoch während der Benutzung durch den Fahrer.

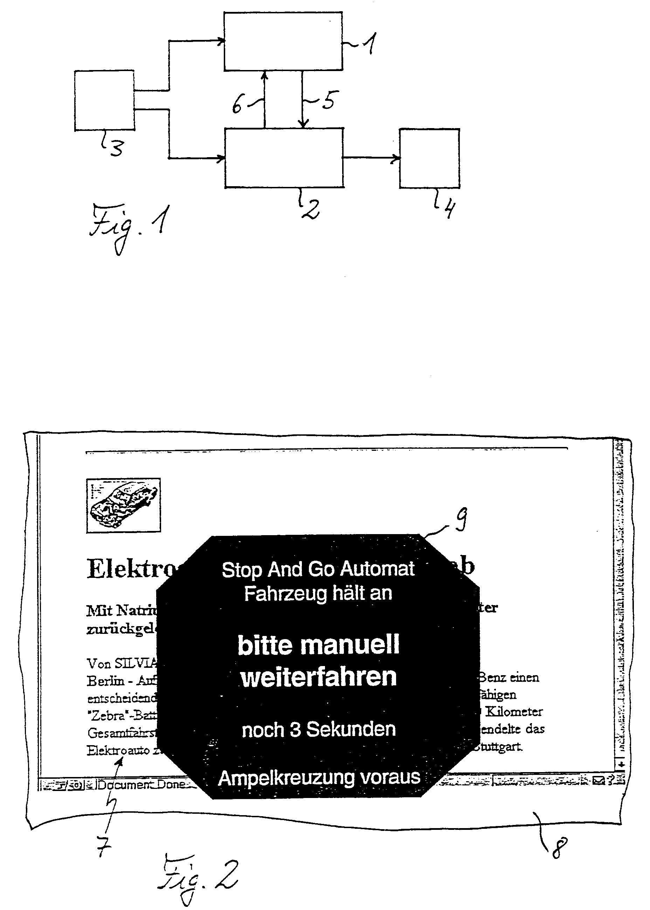

Das in Fig. 1 blockdiagrammatisch gezeigte, in einem Automobil oder einem anderen Kraftfahrzeug verwendbare System beinhaltet Mittel 1 zur zweitweisen autonomen Fuhrung des Fahrzeugs und Mittel 2 zur Kommunikation eines Fahrzeugnutzers, insbesondere des Fahrzeugführers, mit wenigstens einem elektronischen Kommunikationssystem. Die autonomen Fahrzeugführungsmittel 1 können von einem beliebigen herkömmlichen Typ sein, z.B. eine Geschwindigkeits- und/oder Abstandsregeleinrichtung oder eine Spurhaltungseinrichtung, bis hin zum elektronischen Ankoppeln von Fahrzeugen auf der Autobahn und einer automatischen Fahrzeugführung im Stop&Go-Verkehr. Die Kommunikationsmittel 2 können je nach Bedarf unterschiedliche Fahrzeug-Telematikanwendungen umfassen, wie Autoradio, Autotelefon und Fernsehen im Automobil sowie mobile Büroanwendungen in Form eines mobilen Telefaxes und mobilen Telearbeitsgeräten für Verwaltungs- und Administrationstätigkeit. Weiter können die Kommunikationsmittel Anschlüsse an elektronische Datenbanken, z.B. einen Internet-Zugang, enthalten. Dies ermöglicht dem Fahrzeugführer einen Zugriff auf elektronische Informationen im Internet oder in Form elektronischer Zeitungen und elektronischer Post. Außerdem besteht für ihn die Möglichkeit der Unterhaltung, z.B. durch Aufruf von Videospielen.

Eine Bedieneinrichtung 3 dient als Eingabeschnittstelle zwischen dem Systemnutzer einerseits und den Fahrzeugführungsmitteln 1 sowie den Kommunikationsmitteln 2 andererseits. Die Kommunikationsmittel beinhalten eine angeschlossene Anzeigeeinrichtung 4, die insbesondere einen Bildschirm umfassen kann. Außerdem kann sie bei Bedarf auch eine akustische Anzeige mit einem Lautsprecher enthalten.

Der Fahrzeugführer kann über die Bedieneinrichtung 3 die autonomen Fahrzeugführungsmittel 1 aktivieren und dadurch eine anschließende autonome Fahrzeugführung veranlassen. Außerdem kann er über die Bedieneinrichtung die Kommunikationsmittel 2 aktivieren und dadurch das oder die angeschlossenen elektronischen Kommunikationssysteme nutzen. Zweckmäßigerweise aktiviert er die Kommunikationsmittel dann, wenn auch die autonomen Fahrzeugführungsmittel 1 aktiviert sind, da diese dann die Fahrzeugführungsaufgabe übernehmen und der Fahrzeugführer davon entlastet ist.

In manchen Fahrzyklen treten Fahrsituationen auf, in denen eine Übernahme der Fahrzeugführung durch den Fahrzeugführer zweckmäßig ist. Die autonomen Fahrzeugführungsmittel 1 sind so ausgelegt, daß sie derartige Fahrsituationen rechtzeitig erkennen und eine entsprechende Übernahmeinformation generieren. Wenn der Fahrer dabei gerade über die Kommunikationsmittel 1 mit einem elektronischen Kommunikationssystem kommuniziert, wird er eventuell nicht ohne weiteres die erforderlich werdende manuelle Fahrzeugführung erkennen, und er würde auch eine von den Fahrzeugführungsmitteln 1 direkt abgegebene optische oder akustische Warnanzeige möglicherweise nicht ohne weiteres wahrnehmen.

Um hier eine Verbesserung zu erzielen, ist beim gezeigten System eine Kopplung der Fahrzeugführungsmittel 1 mit den Kommunikationsmitteln 2 vorgesehen, die einen bidirektionalen Datenaustausch zwischen diesen beiden Mitteln 1, 2 ermöglicht. Diese Verbindung der beiden Mittel 1, 2 beinhaltet insbesondere, daß die autonomen Fahrzeugführungsmittel 1 bei Erkennen einer demnächst erforderlich werdenden manuellen Fahrzeugführung die dadurch generierte Übernahmeinformation in Form eines entsprechenden Übernahmesignals 5 an die Kommunikationsmittel 2 übermitteln. Die Kommunikationsmittel 2 zeigen die empfangene Übernahmeinformation an ihrer Anzeigeeinrichtung 4 an. Dadurch wird sie dem Fahrzeugführer, der während des gerade laufenden Kommunkationsvorgangs diese Anzeigeeinrichtung 4, insbesondere deren Bildschirm, praktisch ständig im Auge behält, sicher zur Kenntnis gebracht. Es versteht sich, daß die autonomen Fahrzeugführungsmittel 1 so eingerichtet sind, daß sie mit ausreichender Vorwarnzeit feststellen, daß der Fahrer die Fahraufgabe wieder manuell übernehmen sollte.

Als weitere vorteilhafte Maßnahme sind die Kommunikationsmittel 2 so ausgelegt, daß sie aufgrund der Benutzereingaben Aussagen über dessen Reaktionszeit und Aufmerksamkeit machen können, z.B. durch Erfassen der Reaktionszeit des Benutzers bei Videospielen oder beim Umblättern der elektronischen Zeitung. Erkennen nun die vom Fahrzeugführer aktivierten Kommunikationsmittel, daß er seit einer vorgebbaren Zeitspanne keine Bedienhandlung mehr für das aktivierte elektronische Kommunikationssystem vorgenommen hat, fordern sie den Fahrzeugführer über ihre angeschlossene Anzeigeeinrichtung 4 zu einer Eingabereaktion auf. Bleibt daraufhin eine entsprechende Eingabereaktion weiter aus, interpretieren dies die Kommunikationsmittel 2 dahingehend, daß der Fahrzeugführer für eine eventuelle Übernahme der Fahrzeugführungsaufgabe momentan unter Umständen nicht zur Verfügung steht. In diesem Fall nutzen die Kommunikationsmittel 2 ihre Kopplung mit den Fahrzeugführungsmitteln 1 dazu, den Fahrzeugführungsmitteln 1 ein entsprechendes Fahrerinaktivitätssignal 6 zu übermitteln. Dieses Signal 6 informiert die autonomen Fahrzeugführungsmittel 1 von der Tatsache, daß der Fahrzeugführer möglicherweise derzeit zur Übernahme der Fahrzeugführung nicht zur Verfügung steht. Die Fahrzeugführungsmittel 1 sind nun vorzugsweise dafür ausgelegt, in einem solchen Fall einer erkannten Fahrerinaktivität automatisch einer sicheren Fahrzeugzustand herbeizuführen, indem sie das Fahrzeug ausreichend verlangsamen oder bei Bedarf vollständig zum Stillstand bringen. Diese Maßnahme nehmen sie spätestens dann vor, wenn sie erkennen, daß zu einem absehbaren Zeitpunkt eine weitere autonome Fahrzeugführung nicht mehr sicher möglich ist.

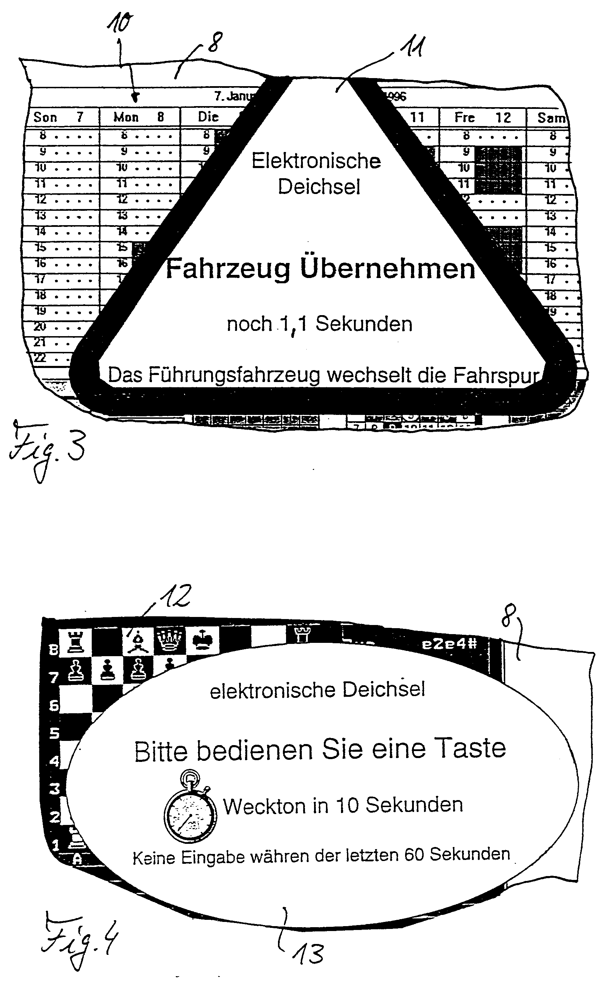

In den Fig. 2 bis 4 sind drei ausgewählte Situationen veranschaulicht, in denen während eines laufenden Kommunikationsvorgangs an einem Bildschirm 8 der Anzeigeeinrichtung 4 fahrzeugführungsrelevante Informationen für den Fahrer eingeblendet werden. Im Fall von Fig. 2 hat der Fahrzeugführer die Kommunikationsmittel 2 zwecks Zugriff auf eine elektronische Zeitung im Internet aktiviert, von welcher er gerade eine Seite 7 liest, die auf dem ausschnittweise gezeigten Bildschirm 8 dargestellt ist. Währenddessen ist ein automatischer Fahrzeugführungsbetrieb mittels einer Abstanosregeleinrichtung für automatischen Stop&Go-Verkehr aktiv, d.h. ein Stop&Go-Automat, der in diesem Beispiel die autonomen Fahrzeugführungsmittel bildet. Zu dem Zeitpunkt von Fig. 2 erkennt der Stop&Go-Automat, daß eine Ampelkreuzung folgt und daher die Fahrzeugführung manuell übernommen werden sollte, nachdem das Fahrzeug vom Automat angehalten wurde. Um dies dem Fahrer anzuzeigen, übermitteln die Fahrzeugführungsmittel 1 dem Kommunikationsmitteln 2 die entsprechenden Informationen, die dann von den Kommunikationsmitteln 2 am Bildschirm 8 der Anzeigeeinrichtung 4 in Form eines Meldungsfensters 9 eingeblendet werden. Dieses Meldungsfenster 9 enthält die für den Fahrzeugführer nötigen Informationen, daß und warum er demnächst, im gezeigten Beispiel in drei Sekunden, die Führung des Fahrzeugs manuell übernehmen soll.

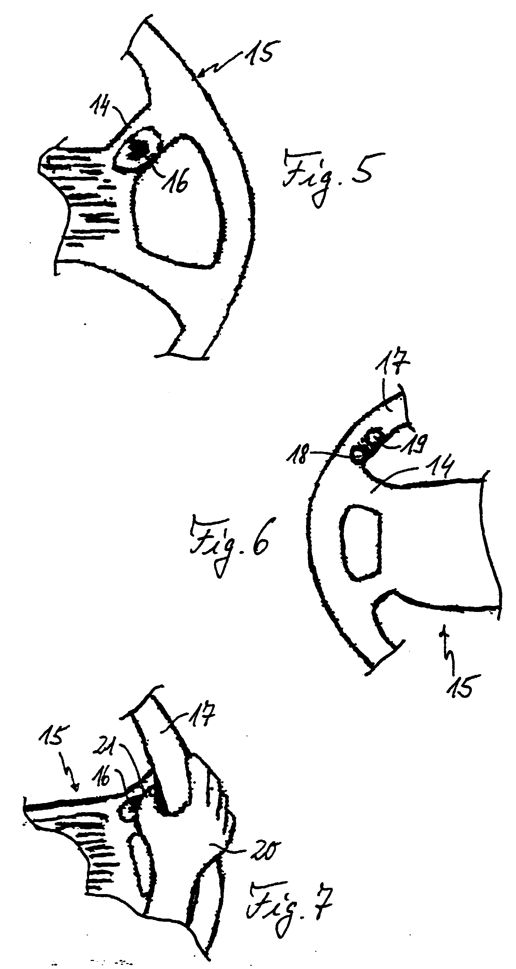

Im Beispiel von Fig. 3 hat der Fahrzeugführer die Kommunikationsmittel 2 gerade zur Kommunikation mit einem elektronischen Terminkalender aktiviert, wodurch auf dem Bildschirm 8 der Anzeigeeinrichtung 4 ein entsprechender Terminplan 10 erscheint. Gleichzeitig sind die autonomen Fahrzeugmittel 1 aktiv, die in diesem Beispiel eine elektronische Ankoppeleinrichtung umfassen, eine sogenannte elektronische Deichsel, die das Fahrzeug auf der Autobahn selbsttätig in einem bestimmten Abstand hinter einem vorausfahrenden Führungsfahrzeug hält. Zum Zeitpunkt von Fig. 3 wechselt dieses Führungsfahrzeug die Fahrspur, was die elektronische Deichsel erkennt und woraus sie auf die Notwendigkeit schließt, daß das Fahrzeug nun manuell geführt werden sollte. Um dies dem gerade mit der Terminplanung befaßten Fahrzeugführer anzuzeigen, übermitteln die Fahrzeugführungsmittel 1 diese Informationen den Kommunikationsmitteln 2, die sie wiederum in Form eines Meldungsfensters 11 in die Anzeige des Bildschirms 8 ihrer Anzeigeeinrichtung 4 einblenden. Dem Fahrzeugführer wird dabei auch angezeigt, wie lange er noch Zeit hat, die manuelle Fahrzeugführung zu übernehmen.

Fig. 4 zeigt eine Situation, in welcher der Fahrzeugführer die Kommunikationsmittel 2 zwecks Zugriff auf eine Videospiel-Daten-basis aktiviert und ein Schachspiel aufgerufen hat. Am Bildschirm 8 der Anzeigeeinrichtung 4 wird das zugehörige Spielfeld 12 angezeigt. Die autonomen Fahrzeugführungsmittel 1 beinhalten wiederum eine elektronische Deichsel entsprechend Fig. 3. Die elektronische Deichsel übernimmt die autonome Fahrzeugführung, während sich der Fahrzeugführer dem Schachspiel widmet. Zum Zeitpunkt von Fig. 4 wurde durch die Kommunikationsmittel 2 festgestellt, daß der Benutzer seit mehr als einer vorgegebenen Zeitspanne keine Bedieneingabe mehr für das Schachspiel vorgenommen hat. Daraufhin fordern die Kommunikationsmittel 2 durch Einblendung eines entsprechenden Aufforderungsfensters 13 am Bildschirm 8 der Anzeigeeinrichtung 4 den Fahrzeugführer dazu auf, zur Kontrolle seiner Präsenz eine Tasteneingabe vorzunehmen, da während der letzten 60 Sek. keine Eingabe erfolgt sei. Das Aufforderungsfenster 13 enthält zudem die Information, daß die elektronische Deichsel aktiv ist. Außerdem wird die Auslösung eines Wecktons in 10 Sek. angekündigt, wenn weiterhin keine Systemeingabe festgestellt wird. In letzterem Fall lösen die Kommunikationsmittel 2 dann nicht nur den akustischen Weckton aus, sondern übermitteln an die autonomen Fahrzeugmittel 1 eine entsprechende Fahrerinaktivitätsinformation. Die elektronische Deichsel sorgt dann bei Empfang dieser Information dafür, daß das Fahrzeug einen sicheren Fahrzustand beibehält, wozu sie das Fahrzeug gegebenenfalls verlangsamt und eventuell ganz zum Stillstand bringt.

In den Fig. 5 bis 7 sind spezielle, vorteilhafte Bedienelemente veranschaulicht, über welche die Bedieneinrichtung 3 bevorzugt verfügt. Diese Bedienelemente dienen als Eingabemittel für den Systemnutzer während der Durchführung von Kommunikationsvorgängen über die aktivierten Kommunikationsmittel 2 und sind Elementen nachgebildet, wie sie dem Nutzer von Notebook- oder Computermausbedienungen geläufig sind. So ist zum einen, wie aus Fig. 5 zu erkennen, an einer Speiche 14 an der Vorderseite eines Lenkrades 15 des Fahrzeugs ein sogenannter Trackball 16 angeordnet, wie er bei Notebooks verwendet wird, um den Bildschirmzeiger zu bewegen. Im vorliegenen Fall kann der Trackball 16 ebenfalls diesem Zweck dienen.

An der Rückseite des Lankrads 15 sind, wie in Fig. 6 zu erkennen, am Lenkradkranz 17 in der Nähe der vorderseitig den Trackball 16 aufweisenden Speiche 14 zwei Tasten 18, 19 angeordnet, welche die Funktion einer linken bzw. rechten Maustaste einer Computermaus erfüllen. Solche Maustasten 18, 19 dienen bekanntermaßen dazu, den Dialog des kommunizierenden Systemnutzers mit dem jeweiligen elektronischen Kommunikationssystem am zugehörigen Bildschirm 8 der Anzeigeeinrichtung 4 zu steuern.

Durch die spezielle, gezeigte Anordnung des Trackballs 16 und der beiden Maustasten 18, 19 ist der Fahrzeugführer in der Lage, diese Bedienelemete 16, 18, 19 mit einer, z.B. seiner rechten, Hand 20 zu bedienen, während diese gleichzeitig den Lenkradkranz 17 umfaßt, wie in Fig. 7 gezeigt. Speziell bedient er mit dem Daumen 21 den Trackball 16 sowie mit Zeigefinger und Mittelfinger die beiden Maustasten 18, 19, die speziell als Mausknöpfe gestaltet sein können. Statt des Trackballs 16 kann ein ähnliches, bei Notebooks verwendetes, funktionsgleiches Eingabemedium verwendet werde, z.B. ein Mausstift nach Art eines Joysticks. Die Bediensignale werden vom Trackball 16 und den beiden Mausknöpfen 18, 19 je nach Systemauslegung über Verbindungsleitungen, die im Lenkrad 15 verlaufen, oder drahtlos zu einem zugehörigen Rechner der Kommunikationsmittel 2 übermittelt, auf dem die genutzte Kommunikationsanwendung läuft.

Neben diesen gezeigten Eingabeelementen 14, 18, 19 kann die Bedieneinrichtung 3 weitere Eingabeelemente umfassen, beispielsweise ein solches, welches eine Spracheingabe durch den Fahrzeugführer ermöglicht.

Ersichtlich beeinträchtigt diese in das Lenkrad integrierte Computermausbedienung die Lenkung des Fahrzeugs bei manueller Fahrzeugführung nicht. Bei Bedarf kann deshalb vorgesehen sein, daß die Computermaus-Bedienelemente 16, 18, 19 auch während Zeiträumen manueller Fahrzeugführung genutzt werden können, vorzugsweise in eingeschränkter Form, z.B. zur Sendereinstellung bei einem Autoradio.

Die obige Beschreibung eines vorteilhaften Ausführungsbeispiels zeigt, daß bei dem erfindungsgemäßen Kraftfahrzeug die Kommunikation zwischen Fahrer und benutzter Kommunikationsanwendung derart gestaltet ist, daß die Aufnahme von Informationen aus dem Verkehrsgeschehen vergleichsweise wenig beeinträchtigt wird und die benötigte Zeit zur Übernahme der manuellen Führungskontrolle über das Fahrzeug nach einer automatischen Fahrzeugführung minimiert wird.

## Patentansprüche

1. Kraftfahrzeug mit
- Mitteln (1) zur zeitweisen autonomen Führung des Fahrzeugs und
- Mitteln (2) zur Kommunikation eines Fahrzeugnutzers mit wenigstens einem elektronischen Kommunikationssystem,
**dadurch gekennzeichnet, daß**
- eine Bedieneinrichtung (3) vorgesehen ist, durch welche die Kommunikationsmittel (2) zwecks Durchführung eines Kommunikationsvorgangs und die Fahrzeugführungsmittel (1) zwecks autonomer Fahrzeugführung aktivierbar sind und
- die aktivieren Fahrzeugführungsmittel (1) bei Erkennen einer erforderlich werdenden manuellen Fahrzeugführung eine Übernahmeinformation (5) an die Kommunikationsmittel (2) übermitteln und die Kommunikationsmittel eine empfangene Übernahmeinformation an einer Anzeigeeinrichtung (8) derselben anzeigen.

2. Kraftfahrzeug nach Anspruch 1, weiter
**dadurch gekennzeichnet, daß**
die aktivierten Kommunikationsmittel (2) nach Ausbleiben einer Nutzereingabe für länger als eine vorgebbare Zeitspanne eine Nutzereingabeaufforderungsinformation (13) abgeben und bei weiterem Ausbleiben einer Nutzereingabe eine Fahrerinaktivitätsinformation (6) an die Fahrzeugführungsmittel (1) übermitteln.

3. Kraftfahrzeug nach Anspruch 1 oder 2, weiter
**dadurch gekennzeichnet, daß**
die Bedieneinrichtung (3) Nutzereingabemittel (16, 18, 19) für die Kommunikationsmittel (2) umfassen, die an einer handbedienten Lenkvorrichtung (15) des Fahrzeugs angeordnet sind und ein Trackball- oder Mausstift-Eingabeelement (16) und/oder ein Maustasten-Eingabeelement (18, 19) umfassen.
